# EUROPEAN PATENT APPLICATION

(11) **EP 4 443 353 A1**
(43) Date of publication of application: **09.10.2024**
(21) Application number: 24169054.4
(22) Date of filing: 08.04.2024
(51) Int. Cl.: G06Q 10/047, G06Q 10/08, G06Q 10/0833, G06Q 10/0835, G06Q 10/0836, G06Q 50/04, B65G 1/137, G06Q 10/087, G06Q 10/083, G06Q 10/10

(54) **PICKING METHOD AND SYSTEM FOR USE IN ORDER PROCESSING**

(30) Priority: 06.04.2023 WO PCT/EP2023/059225
(71) Applicant: Helmut-Schmidt-Universität, Universität der Bundeswehr Hamburg, 22043 Hamburg (DE)
(72) Inventor: HEIN, Benedikt, 22043 Hamburg (DE); KIRCHHEIM, Alice Prof. Dr.-Ing., 22089 Hamburg (DE); NEHRKE, Lara, 22043 Hamburg (DE); ULRICH, Stephan Dr.-Ing., 22043 Hamburg (DE)
(74) Representative: RGTH

(57) **Abstract**

In order to provide an improved picking method for use in order processing a picking method is proposed, comprising the steps of
a) Providing at least a first object selection (10) from a storage facility (11a) by means of a first object staging device (12),
b) Determining of a first meeting point (Pm1) and a first meeting time (T1) for the first object staging device (12) and at least a first picking device (13) having a first object collection device (14) based on a current position of the first object staging device (12) and a current position of the first picking device (13),
c) Calculating of routes (R) for each of the first object staging device (12) and the first picking device (13) to the first meeting point (Pm1),
o) Moving the first object staging device (12) with the first object selection (10) and the first picking device (13) with the first object collection device (14) to the first meeting point (Pm1) at the first meeting time (T1) along the respectively calculated routes (R),
p) Handing over of the first object selection (10) from the first object staging device (12) to the object collection device (14) of the first picking device (13) after reaching the first meeting point (Pm1).

## Description

The invention relates to a picking method for use in order processing, a system configured for use in said method as well as a computer program product and a computer-readable storage medium to perform said method.

In recent decades, the number of individually compiled orders to be shipped has risen steadily due to personalization of products and increasing e-commerce. To meet these new requirements, there is an acute need for efficient order picking systems. In this context, picking has the "aim of putting together partial quantities from a total quantity of goods (assortment) on the basis of requirements (orders) (guideline VDI 3590-01). Within the picking process usually three essential elements are distinguished:
- Staging unit: place (location or carrier) where a (partial) quantity of the items is stored available in the warehouse stock for the picking order at the time of picking.
- Collecting unit: place (location or carrier) where the items for the order are assembled.
- Picking unit: Person or robot who places the required number of articles of an order item from the staging unit to the collecting unit.

In the known order picking principles, at least one of the three components under consideration (i.e.: staging unit, collecting unit or picking) is static and the remaining components move towards it.

It is an object of the invention to provide an improved picking process.

The object of the invention is solved by a picking method for use in order processing, comprising the steps of
a) Providing at least a first object selection from a storage facility by means of a first object staging device,
b) Determining of a first meeting point and a first meeting time for the first object staging device and at least a first picking device having a first object collection device based on a current position of the first object staging device and a current position of the first picking device,
c) Calculating of routes for each of the first object staging device and the first picking device to the first meeting point,
d) Moving the first object staging device with the first object selection and the first picking device with the first object collection device to the first meeting point at the first meeting time along the respectively calculated routes,
e) Handing over of the first object selection from the first object staging device to the object collection device of the picking device after reaching the first meeting point.

Preferably the first object staging device and the first picking device continue moving after reaching the first meeting point. Thus, it is advantageously possible to provide a more efficient picking process.

Preferably the first object staging device and the first picking device move along the same route during the handing over of the first object selection. In other words, the picking process is performed while the involved components, in particular the one or more object staging devices, object collection devices and picking devices, are moving and do in particular not stop in order to hand over objects or object collections between the components. Thus, it is advantageously possible to provide a more efficient picking process since the first object staging device and the first object picking device are already moving towards a further meeting point while handing over objects. In particular the first object staging device and the first object picking device do not stop along their calculated routes.

Thus, while the first object staging device and the first object picking device are moving along a route and the first object collection is handed over from the first object staging device to the first object picking device both components may preferably be already moving on a calculated route towards a further meeting point with another, for example a second object staging device or a second object picking device. In this case, the first meeting point between the first object staging device and the first object picking device is located on a calculated route between the first object staging device and the first object picking device and further component.

The aforementioned concept of not stopping at calculated meeting points and continuation of movement of the respective components that are meeting, in particular the object staging device and the object picking device, may likewise be applied for any further second, third, fourth etc. object staging device and object picking devices.

Alternatively the first object staging device and the first object picking device and any other device involved in the picking method described herein may stop at the respectively calculated meeting points.

With the above picking method, the efficiency of the picking process can advantageously furthermore be increased since all three components i.e., the object staging device, the object collection device and the picking device are moved in order to transport an object selection from the storage facility to another facility for further processing in the order process. The increase in efficiency is achieved by shortening traveling times and traveling distances of the components due to the mobility of all components. In contrast to that, in prior art solutions, at least one of the aforementioned components is configured static such that the remaining two components have to move towards the static component. This usually results in longer traveling distances and traveling times for the two moving components.

The inventive picking method is preferably part of an order process that may include further steps that are not part of the method described herein, such as further sorting of the objects, packing or pre-handling in the storage facility.

Preferably, a second object staging device is provided and the method further comprises the steps of
f) Providing a second object selection from the storage facility by means of the second object staging device,
g) Determining of a second meeting point and a second meeting time between the second object staging device and the first picking device based on a current position of the second object staging device and a current position of the first picking device, and
h) Calculating of routes for each of the second object staging device and the first picking device to the second meeting point,
wherein preferably steps f) to h) are performed at the same time as, before or after steps a) to e) are performed.

The second object staging device is preferably configured different or identical to the first object staging device. The first and the second object staging device may differ in their capability of transporting the object selection. For example, the first object staging device may be configured for transporting one or more large objects whereas the second object staging device is configured for transporting one or more small objects. Furthermore, the first and second object staging devices may differ in the number of objects they can transport.

Preferably, the picking method further comprises the steps of
i) Recalculating the second meeting point and the second meeting time to an updated second meeting point and updated second meeting time based on a current position of the first picking device and/or the second object staging device, wherein the current position of the first picking device preferably is the first meeting point, between the second object proving device and the first picking device, wherein step i) is preferably calculated after the step e).

Preferably, the picking method further comprises the steps of
j) Calculating of routes for each of the second object staging device and the first picking device to the second updated meeting point, and
k) Moving the second object staging device and the first picking device to the second updated meeting point at the second updated meeting time, wherein preferably the second object staging device and the first picking device (continue moving after reaching the second updated meeting point.

Preferably, the picking method further comprises the step of
l) Handing over the second object selection from the second object staging device to the object collection device of the first picking device after reaching the second updated meeting point.

In this way, the movement of the picking device with the second object staging device may advantageously be updated after the picking device and the first object staging device have met at the first meeting point in cases where the second object staging device has moved after the meeting time and meeting point between the picking device and the second object staging device has firstly been determined.

Preferably, the recalculating of the first and/or second meeting time and/or the first and/or second meeting point may be performed depending on external events, such as a change in order or other events which may cause that current meeting times or meeting points are not up to date anymore or that the routes resulting from these meeting times and meeting points are not the most effective anymore.

Preferably, the picking method comprises the step of
m) Transporting of the first object selection to a delivery point by the first picking device, in particular from the first meeting point, wherein step m) is preferably performed after steps e) or l).

Preferably during handing over of the first object selection from the first object staging device to the object collection device of the first picking device the first picking device moves along at least a part of the route calculated in step h) for the first picking device to the second meeting point.

Furthermore, the picking method comprises the step of
n) Transporting of the second object selection and/or the first object selection to a delivery point by the first picking device, in particular after reaching the first meeting point or the second updated meeting point.

The first and/or second object selections are transported to the delivery point for further processing. There may be several delivery points provided and it determined to which of these delivery points the objects in the first picking device are transported based on the order to which the objects belong.

In particular, the first picking device may move to several delivery point subsequently in order to bring a first part of the objects to a first delivery point and a further part of the objects to a second delivery point. This is based on the specific order and the further processing that is scheduled for the objects and/or the order.

Preferably, the picking method further comprises the step of calculating a route from a current position of the first picking device to the delivery point and moving the first picking device to the delivery point along said route. Preferably, further routes to further delivery points may additionally be calculated.

Preferably, the picking method further comprises the step of handing over of at least a part of the objects, in particular all objects, present in the first object collection device from the first picking device to the delivery point. Preferably, the first picking device hands over objects to further delivery points. From here, the objects may further be processed.

Preferably, the first and second object selection (or any other object selection that may be picked in the described method) may be or may contain objects belonging to a picking order that is to be commissioned. In other words, a picking order comprises objects from one or more object selections. The objects may be selected from an assortment in the storage facility. The goal of the picking method is to compile a picking order, i.e. a subset of the assortment, from the assortment by means of the interaction of the object staging device or devices and the picking device or devices having the object collection devices. After the picking order is compiled in the picking device it is transferred to a further delivery point.

A picking order may comprise one or more customer orders or a part of one or more customer orders. An order is generally comprised of one or more positions of a certain type and amount of an object or objects.

Preferably, the first and second object staging devices (or any further object staging device that may be provided) and the first picking device (or any further picking device that may be provided) are configured as movable units having electronic and mechanic components to enable them to, preferably automatically or autonomously, move within a commissioning and/or storage area. For example, each of the aforementioned devices comprises a drive unit, such as a motor, in particular an electric motor, an energy storage unit, in particular a batterie and dedicated control units for controlling the movement of the devices. In particular, the devices are configured as robotic units. Preferably, the first picking device comprises a first manipulating mechanism, in particular a first grabbing mechanism, for picking up, handing over and/or dropping down of objects, in particular objects in the first object collection device, objects in the first object staging device and/or in a second object staging device. Thus, via the first manipulating mechanism may be used for transferring objects between the first picking device, in particular the first object collection device, and the first object staging device, the second staging device and/or one or more delivery points. The first manipulating mechanism may hand over or pick up one or more objects to or from another manipulating mechanism or object container or receive one or more objects from another manipulating mechanism or object container.

Preferably, the first object staging device comprises a second manipulating mechanism, in particular a second grabbing mechanism, for picking up, handing over and/or dropping down of objects, in particular object selections from the storage facility. The first manipulating mechanism may hand over or pick up one or more objects to or from another manipulating mechanism, the facility storage or object container or receive one or more objects from another manipulating mechanism, the facility storage or object container.

The second manipulating mechanism may in particular cooperate with the first manipulating device for transferring object from the first object staging device to the picking device, in particular the first collection device, or with a further manipulating device of the storage facility.

Preferably, the second object staging device comprises a third manipulating mechanism, in particular a third grabbing mechanism, for picking up, handing over and/or dropping down of objects, in particular object selections from the storage facility. In particular, the third manipulating device may be configured identical to the second manipulating device or different.

In general, the aforementioned manipulating devices may be configured identical or different. The manipulating devices may in particular differ with respect to the size, shape or weight of objects they may manipulate.

In the most simple case, one or more of the aforementioned manipulating devices may be a container or compartment that may be rotated or tilted in order to drop objects from the container or compartment into a further compartment of a further component or device. Alternatively, the manipulating device may comprise arms, such as robotic arms, which may handle an object, for example by grabbing.

Each of the manipulating devices may comprise sensors facilitating and enabling the handing process by detecting the objects to be handled.

Preferably, the first picking device comprises a first sensor unit for determining a position of the first picking device and/or for determining a distance between the first picking device and a further component, in particular the first and/or a second object staging device. For this, the first sensor unit in particular comprises a distance sensor, in particular an optical distance sensor, such as a LIDAR sensor, and/or a position sensor.

Preferably, position values and/or distance values of the first sensor unit are used for calculation of meeting points, meeting times and/or routes. The meeting points may preferably be the first meeting point, the second meeting point and/or the second updated meeting point. The meeting times may preferably be the first meeting time, the second meeting time and/or the second updated meeting time. The routes may be any route between any one of the components of the storage facility, the first object staging device, the second object staging device, the first picking device, the delivery point and/or any further components that may be involved in the method, such as further object staging devices and further picking devices.

Preferably, the first object staging device comprises a second sensor unit for determining a position of the first object staging device and/or for determining a distance between the first object staging device and a further component, in particular the first picking device.

Preferably, position values and/or distance values of the second sensor unit are used for calculation of meeting points, meeting times and/or routes. The meeting points may preferably be the first meeting point, the second meeting point and/or the second updated meeting point. The meeting times may preferably be the first meeting time, the second meeting time and/or the second updated meeting time. The routes may be any route between any one of the components of the storage facility, the first object staging device, the second object staging device, the first picking device, the delivery point and/or any further components that may be involved in the method, such as further object staging devices and further picking devices.

That is, the position values may, inter alia, be used for calculation of routes. For this, the second sensor unit in particular comprises a distance sensor, in particular an optical distance sensor, such as a LIDAR sensor, and/or a position sensor.

Preferably, the second object staging device comprises a third sensor unit for determining a position of the second object staging device and/or for determining a distance between the second object staging device and a further component, in particular the first picking device.

Preferably, position values and/or distance values of the third sensor unit are used for calculation of meeting points, meeting times and/or routes. The meeting points may preferably be the first meeting point, the second meeting point and/or the second updated meeting point. The meeting times may preferably be the first meeting time, the second meeting time and/or the second updated meeting time. The routes may be any route between any one of the components of the storage facility, the first object staging device, the second object staging device, the first picking device, the delivery point and/or any further components that may be involved in the method, such as further object staging devices and further picking devices.

For this, the third sensor unit in particular comprises a distance sensor, in particular an optical distance sensor, such as a LIDAR sensor, and/or a position sensor.

Distances between two components may either directly be determined my means of a dedicated distance sensor or by determining the distance based on their respective positions.

In particular, the first, second and/or third sensor unit may each enable the calculation of routes and/or moving the respective device they are assigned to along a route. The first, second and/or third sensor unit may be connected to a controlling device of the respective device they are assigned to or to a central control unit which will be described in detail in the following.

Preferably, at least a part of the calculation of meeting points, meeting times and/or routes are performed by a first control unit of the first picking device.

Further preferably, at least a part of the calculation of meeting points, meeting times and/or routes are performed by a second control unit of the first object staging device.

Preferably, at least a part of the calculation of meeting points, meeting times and/or routes are performed by a third control unit of the second object staging device.

Furthermore, a central control unit is provided. The central control unit is preferably not included in any one of the first or second object staging device or the picking device but is a separate component of the system.

Preferably, the central control unit controls performing at least one of steps b) and c).

Preferably, the central control unit controls performing at least one of steps g), h), i) and j).

With regard to the aforementioned first, second, third and central control unit, the meeting points may preferably be the first meeting point, the second meeting point and/or the second updated meeting point. The meeting times may preferably be the first meeting time, the second meeting time and/or the second updated meeting time. The routes may be any route between any one of the components of the storage facility, the first object staging device, the second object staging device, the first picking device, the delivery point and/or any further components that may be involved in the method, such as further object staging devices and further picking devices.

The controlling of the method and the individual method steps may therefore be performed centrally by a central control unit or decentral by the control units of the individual components such as the first or second object staging device or the picking device. Thus, it may be that the controlling of the individual method steps is distributed over the first, second and third control unit.

For example, the calculation of routes between the first object staging device and the first picking device may be either performed in the first control unit, the second control unit or in the central control unit. The same applies to any other route calculated during the picking process. The controlling may be performed based on the layout of the system and the configuration of the components. For example, there may not be provided a central control unit and the controlling is performed decentral in the first, second and third control unit. Alternatively, all method steps relating to coordination of the movement of the first or second object staging device or the picking device relative to one another may, in particular the calculating of all routes, be performed by the central control unit. In this case, the first, second and third control units may be simple and universal in design.

Preferably, data, in particular relating to the first meeting time, the first meeting point, second meeting time, second meeting point, the second updated meeting time and/or the second updated meeting point are transmitted between any one of the first and/or second object staging device, the first picking device, and any control unit that may be provide within the described method.

These data may include meeting times and meeting points as already explained as well as any further data necessary to perform the described picking process. These data could be sensor data, in particular from sensors and sensor units described above and/or data relating to the order to be picked.

Preferably, these data are transmitted wirelessly, in particular by means of respective transmitting and receiving units of the respective aforementioned components.

Preferably, after the first and/or second object staging device (or any further object staging device) have met with a picking device and transferred their respective object collection to the picking device, the object staging device returns to the storage facility to pick up a next object collection for the next picking process.

Similarly, the first picking device (or any further picking device provided) is ready for the next picking process once the objects on the object collection device of the picking device have been transferred to a delivery point.

Preferably, a second object staging device is provided, wherein current positions of the first object staging device, the second object staging device and the first picking device are determined and wherein a first distance between the first picking device and the first object staging device and a second distance between the first picking device and the second object staging device are determined, and wherein a first meeting time and a second meeting time for the first picking device and the second object staging device with the first picking device are determined based on the first and the second distance. By this, the picking process can be planned based on the current positions of the components such that the most effective routes for the components may be determined as well as the order in which the components meet. This advantageously increased the effectiveness of the method. For example, it may be determined whether it is more effective for the first picking device to meet the first object staging device or the second object staging device.

Preferably, the first and second meeting times are determined such that traveling times and/or traveling distances along routes of the first and/or second object staging device between their respective current positions and the current position of the first picking device are minimized. This ensures an effective picking process.

Preferably, further object staging devices, for example a third, fourth or fifth object staging devices, may be provided which may be configured identical or different to one of the first or second object staging device. The further object staging devices may provide further object collections. In particular, the further object staging devices may be used in the picking method in the same manner as the first and/or second object staging devices are used. In addition, the further object staging devices may meet with the picking device after meeting between the picking device and the first and the second staging device is completed. In this way, the picking device may meet with and take object selections from several object staging devices and may collectively transport the object selections to further processing. For example, the first and the second object staging device each provide a part of one order in their respective object collections. The first picking device then successively collects the objects for that order from the first and second object staging devices.

Similarly, further picking devices, for example a second, third, fourth or fifth picking device may be provided which may be configured identical or different to the first picking device. Each of the picking devices has an object collection device. The further picking devices may be used in the above-described method in the same way as the first picking device. Thus, any features described with respect to the first picking device may be implemented for any one of the further picking devices.

In particular, the method may comprise that one object staging device, for example the first object staging device, may meet with at least two object picking devices, for example the first picking device and a further second object picking device. This may be the case when the object staging device carries objects that belong to different orders that are picked by two different object picking devices. In this case, a first meeting time and a first meeting point are calculated for the object staging device and the first object picking device as well as a second meeting time and second meeting point for the object staging device and the second object picking device. The principles of calculation of the meeting times and meeting points may preferably be analogous to the case where one first object picking device meets more than one object staging device as previously described.

Preferably, the number of object staging devices is larger than the number of picking devices in one picking system where the picking method is used. For example, there may be provided one picking device and three object staging devices or two picking devices and four object staging devices. Alternatively, the number of object staging devices and picking devices is identical.

Preferably, several picking process are performed in parallel wherein each picking process may include the picking method described before. In particular, the components described for use in the picking method, such as the object staging devices, the picking devices with the object collection devices may participate in several of these picking processes in parallel. For this reason, meeting times and meeting points of the aforementioned components are calculated dynamically, for example in predetermined time intervals or after certain events. For example, after each meeting of two components, their further meeting points and times with other component are updated and re-calculated based on their current positions (which has changed since the initial calculation of meeting point and meeting time). In this way, the components are always moved on the most effective routes.

The object of the invention is furthermore solved by a system comprising at least a first object staging device and at least a first picking device having a first object collection device each configured for use in a picking method with the aforementioned features.

Preferably, the system comprises at least a second object staging device. The second object staging device is in particular configured as the second object staging device previously described. Further object staging devices may be provided.

Preferably, the system comprises at least a second object picking device having a second object collection device. The picking device is in particular configured as the second picking device previously described. Further picking devices may be provided.

Preferably, the storage facility comprises one or more storage ports at which the object staging devices may pick up objects or object collections from the storage.

The object of the invention is furthermore solved by a computer program product comprising a computer-readable storage medium having stored thereon a program that, once loaded into the computer's memory, enables a computer to perform the picking method with the aforementioned features, in cooperation with a system with the aforementioned features.

The object of the invention is furthermore solved by a computer-readable storage medium having stored thereon a program that, once loaded into the computer's memory, enables a computer to perform a method with the aforementioned features, in cooperation with a system with the aforementioned features.

The invention is explained in more detail below with reference to exemplary embodiments. It shows in
- Fig. 1: a schematic overview over several stages of a system during a picking method involving a first and a second object staging device,

- Fig. 2: a perspective view on the system using the picking method,
- Fig. 3: a schematic overview over a system using the picking method involving several object staging devices and several picking devices, and
- Fig. 4: a flow diagram of a picking method according to the invention.

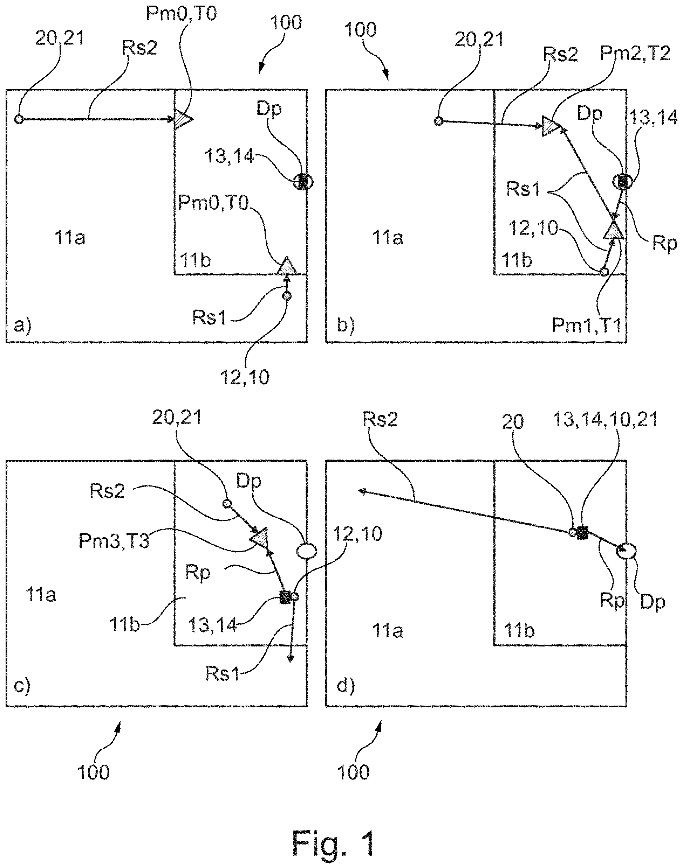

Figure 1 shows a schematic overview over a system 100 for use in a picking method. Depicted is a storage facility 11a in which a first object staging device 12 and a second object staging device 20 may move. The first object staging device 12 carries a first object selection 10 and the second object staging device 20 carries a second object selection 21. Both object collections 10, 21 have been retrieved from the storage facility 11a by their respective object staging device 12, 20. The object collections 10, 21 may comprise one or more objects that may belong to one or more orders that are to be picked during the picking method by the fa first picking device.

A picking area 11 b is located adjacent to the storage facility 11a. Within the picking area 11b, the first picking device 13 may move. The picking area 11b is the area where the first and second object staging devices 12, 20 and the picking device 13 may meet in order to transfer objects that are to be picked.

In scenario a) of figure 1 both the first and the second object staging devices 12, 20 are located in the storage facility 11b where they have retrieved objects that have been included to their object collections 10, 21. In this stage, the first and second object staging 12, 20 are ready to meet with the first picking device 13 that is located near a delivery point Dp where it may just have finished picking a previous order. First, initial meeting points Pm0 in the picking area 11b at an initial meeting time T0 for both the first and the second object staging device 12, 20 with the first picking device 13 are calculated. Both the first and the second object staging device 12, 20 move towards the respective initial meeting point Pm0 in the picking area 11b.

Once the first and second object staging devices 12, 20 have arrived in the picking are 11b, a first meeting time Pm1 and a first meeting time T1 are calculated for the first object staging device 12 and the first picking device 13. At the same time, a second meeting point Pm2 and second meeting time T2 are calculated for the second object staging device 20 and the first picking device 13.

The first and second meeting point Pm1, Pm2 and first and second meeting time T1, T2 are each calculated on the basis of the current positions of the first and second object staging device 12, 20 and the first picking device 13. The first and second meeting point Pm1, Pm2 and first and second meeting time T1, T2 are each calculated such that the picking of the objects is most effective. This may be achieved by choosing meeting times and meeting points that result in the shortest travelling times and/or shortest travelling paths of the first and second object staging device 12, 20 and the first picking device 13.

As shown in scenario b), the meeting times T1, T2 have been calculated such that the first picking device 13 first meets with the first object staging device 12 at the first meeting point Pm1 at the first meeting time T1. Routes Rs1, Rs2, Rp are calculated for both the first object staging device 12 and the first picking device 13 and the first object staging device 12 and the first picking device 13 are moved along their respective routes R to the first meeting point Pm1. The route Rp for the first picking device 13 to the second meeting point Pm2 is here the route between the first meeting point Pm1 and the second meeting point Pm2.

The meeting of the first object staging device 12 and the first picking device 13 is shown in scenario c). At the first meeting point Pm1, all or at least a part of objects of the first object collection 10 carried by the first object staging device 12 are transferred to a first object collection device 14 of the first picking device 13. This may be done by either the first picking device 12 or the first picking device 13 handing over the one or more objects to the other component.

After one or more objects have been transferred from the first object staging device 12 to the first picking device 13, the first object staging device 12 returns to the storage facility 11b to retrieve a further object collection for a further, following picking process.

After the first object staging device 12 and the first picking device 13 have met, the first picking device 13 is scheduled to meet with the second object staging device 20. For this, an updated second meeting time T3 and an updated second meeting point Pm3 are calculated for the second object meeting device 20 and the first picking device 13 to meet. Recalculating is performed because one of the components 20, 13 may have moved in the meantime so that new, more effective meeting times and meeting points are calculated based on current positions of the second object staging device 20 and the first picking device 13. Such recalculating is performed regularly throughout the method when components have moved to ensure that the components always move along the most effective routes. Routes are calculated for the second object staging device 20 and the first picking device 13 to the second updated meeting point Pm3 and the second object staging device 20 and the first picking device 13 are moved to the second updated meeting point Pm3 at the updated second meeting time T3.

At the second updated meeting point Pm3, all or at least a part of objects of the second object collection 21 carried by the second object staging device 20 are transferred to the first object collection device 14 of the first picking device 13. This may be done by either the second picking device 20 or the first picking device 13 handing over the one or more objects to the other component.

After the one or more objects have been transferred from the second object staging device 20 to the first picking device 13, the second object staging device 20 returns to the storage facility 11b to retrieve a further object collection for a further, following picking process.

As can be seen in scenarios d) in figure 1, the first picking device 13 is moved to the delivery point Dp along a route Rp that is calculated beforehand where the objects in the object collection device 14 are dropped off for further handling. The first picking device 13 may now perform picking of a further order.

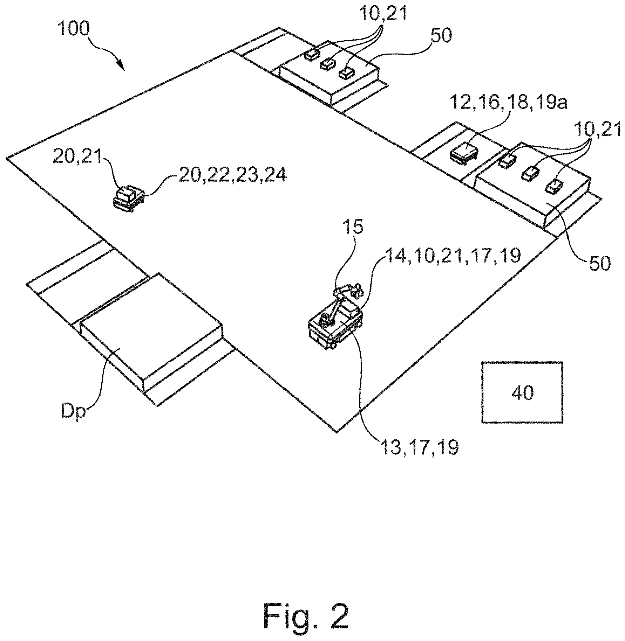

Figure 2 shows a perspective view on the system 100 using the picking method. Shown are the components of figure 1 which may essentially perform the method steps described with respect to figure 1. Additionally provided are two storage facility ports 50 adjacent to the picking area 11b. The storage facility ports 50 are a transfer zone where pre-assembled object collections 10, 21 with objects from the storage facility 11a are placed for the object staging devices 12, 20 to pick up. For example, containers or bins may be provided including an object collection 10, 21. The containers or bins may be transferred to the object staging devices 12, 20. During the picking process, the container or bins with the respective object collections 10, 21 may be further transferred to the picking device 13 and then to the delivery point Dp.

As can further be seen in figure 2, the first picking device 13 comprises a first manipulating mechanism 15 for manipulating objects. The manipulating mechanism 15 is configured as a robotic arm which may grab and move and release objects, in particular for taking objects from another component and placing objects in the object collection device 14 (or the containers or bins placed therein). The first manipulating mechanism 15 may further be configured to manipulate the containers or bins.

While in figure 2, only the first picking device 13 is shown equipped with a manipulating mechanism, the first and second object staging devices 12, 20 and/or the storage facility ports 50 may also be equipped with respective second and third manipulating mechanism 16, 22 or further manipulating mechanisms. In particular, manipulating devices 15, 16, 22 configured for manipulating the containers and bins may be provided in the further components.

Furthermore, each of the components comprise sensor units 17, 18 23. These sensor units provide sensor date from which a position and/or a distance of the respective component to another component or other subjects in the surrounding may be determined. The sensor data may be used for calculation of the aforementioned meeting points, meeting times and routes. These sensors may be position sensors and/or distance sensors.

Additionally provided are first control unit 19 in the first picking device 13, a second controlling device 19a in the first object staging device 12 and a third control unit 24 in the second object staging device 20. The controlling devices 19, 19a, 24 may calculate routes, meeting time and/or meeting points. Further provided is a central control unit 40 which may also calculate routes, meeting time and/or meeting points. Depending on the specific application, calculation of routes, meeting time and/or meeting points may exclusively be performed in one or more of the controlling devices 19, 19a, 24 or exclusively in the central controlling device 40. Alternatively, calculation of routes, meeting time and/or meeting points may be performed in a distributed manner in the controlling devices 19, 19a, 24 and/or the central control unit 40.

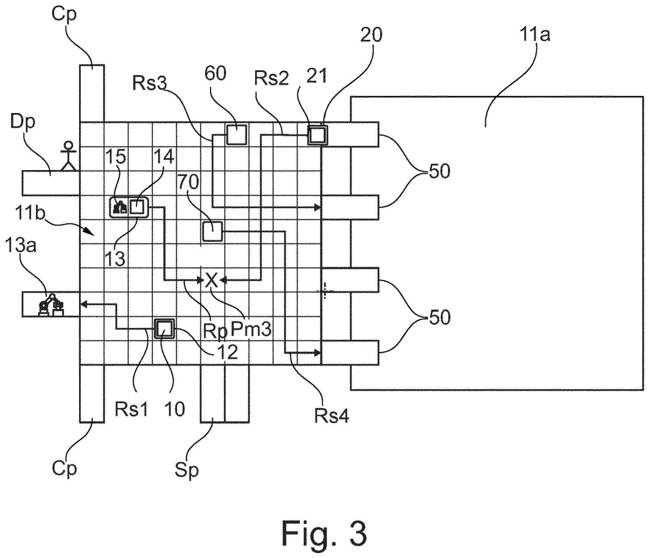

Figure 3 shows a schematic overview over a system 100 using the picking method involving several object staging devices and several picking devices. The system 100 comprises the first and second object stating devices 12, 20 and a third and fourth object staging devices 60. In the scenario depicted in figure 3 a first object staging device 12 carries a first object selection 10 to a stationary picking device 13a. The stationary picking device 13a has a manipulating mechanism for transferring the objects from the first object staging device 12 to an object collection device (not shown) of the stationary picking device 13a. The stationary picking device 13a may be provided in addition to the first picking device 15.

The first picking device 15 has the first object collection device 14 which does not carry any objects but is being moved to a second updated meeting point Pm3 with a second object staging device 20 which just received a second object collection 20 from one of four storage facility ports 50 which provide object collections from the storage facility 11a. For both the first picking device 13 and the second object staging device 21 routes R are calculated to the second updated meeting point Pm3.

Further provided is a delivery point Dp for the first picking device 13 to drop off objects. The delivery point may for example be a packing station where personnel will pack objects received by the first picking device 13.

Additionally provided is a service point Sp. All the movable components such as the first to fourth object staging device and the first picking device in the picking area may move to the service point Sp for maintenance and/or repair. For example, damaged parts may be repaired and/or energy storages of drive units of the components, in particular batteries, may be replaced or charged. Routes for the individual components to the service point may be calculated so that the components may, in particular automatically, move to the service point.

Further provided are additional collection points for objects or object collections at which the objects or object collections are further handled. These collections points may be configured differently depending on the type of further processing.

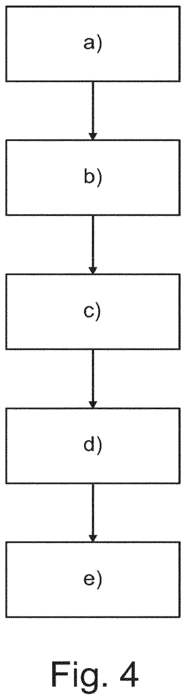

Figure 4 shows a flow diagram of steps of the picking method according to the invention. In a first step a) at least a first object selection (10) are provided from a storage facility (11a) by means of a first object staging device (12). Further, in step b) a first meeting point (Pm1) and a first meeting time (T1) for the first object staging device (12) and at least a first picking device (13) having a first object collection device (14) are determined based on a current position of the first object staging device (12) and a current position of the first picking device (13). Based on the results of step b), in step c) of routes (Rp, Rs1, Rs2) for each of the first object staging device (12) and the first picking device (13) to the first meeting point (Pm1) are calculated. Based on the routes, in step d) the first object staging device (12) with the first object selection (10) and the first picking device (13) with the first object collection device (14) are moved to the first meeting point (Pm1) at the first meeting time (T1) along the respectively calculated routes (Rp, Rs1, Rs2). Then, in step e) the first object selection (10) from the first object staging device (12) are handed over to the object collection device (14) of the first picking device (13) at the first meeting point (Pm1).

**List of reference signs**
- 100: system

- 10: first object selection
- 11a: storage facility
- 11b: picking area
- 12: first object staging device
- Pm1: first meeting point
- T1: first meeting time
- 13: first picking device
- 13a: stationary picking device
- 14: first object collection device
- Pc1: current position of the first object staging device
- Pc2: current position of the first picking device
- Rp: route of first picking device
- Rs1: route of first staging device
- Rs2: route of second staging device
- Rs3: route of third staging device
- Rs4: route of fourth staging device
- Dp: delivery point
- Cp: Collection point

- 20: second object staging device
- 21: second object selection
- Pm0: meeting point
- T0: meeting time
- Pm2: second meeting point
- T2: second meeting time
- Pm3: updated second meeting point
- T3: updated second meeting time

- 15: first manipulating mechanism
- 16: second manipulating mechanism
- 22: third manipulating mechanism

- 17: first sensor unit
- 18: second sensor unit
- 23: third sensor unit
- 19: first control unit
- 19a: second control unit
- 24: third control unit

- 40: central control unit
- 30: second picking device
- 31: second object collection device

- 50: storage facility ports
- 60: third object staging device
- 70: fourth object staging device

- a)-e): picking method steps

## Claims

1. Picking method for use in order processing, comprising the steps of
a) Providing at least a first object selection (10) from a storage facility (11a) by means of a first object staging device (12),
b) Determining of a first meeting point (Pm1) and a first meeting time (T1) for the first object staging device (12) and at least a first picking device (13) having a first object collection device (14) based on a current position of the first object staging device (12) and a current position of the first picking device (13),
c) Calculating of routes (Rs1, Rp) for each of the first object staging device (12) and the first picking device (13) to the first meeting point (Pm1),
d) Moving the first object staging device (12) with the first object selection (10) and the first picking device (13) with the first object collection device (14) to the first meeting point (Pm1) at the first meeting time (T1) along the respectively calculated routes (Rs1, Rp),
e) Handing over of the first object selection (10) from the first object staging device (12) to the object collection device (14) of the first picking device (13) after reaching the first meeting point (Pm1).

2. Picking method of claim 1, wherein the first object staging device (12) and the first picking device (13) continue moving after reaching the first meeting point (T1).

3. Picking method of claim 1 or 2, wherein the first object staging device (12) and the first picking device (13) move along the same route during the handing over of the first object selection (10).

4. Picking method of one of the preceding claims, wherein a second object staging device (20) is provided and the method further comprises the steps of
f) Providing a second object selection (21) from the storage facility (11b) by means of the second object staging device (20), g) Determining of a second meeting point (Pm2) and a second meeting time (T2) between the second object staging device (20) and the first picking device (13) based on a current position of the second object staging device (20) and a current position of the first picking device (13), and
h) Calculating of routes (Rs1, Rp) for each of the second object staging device (20) and the first picking device (13) to the second meeting point (Pm2),
wherein preferably steps f) to h) are performed before at the same time as, or after steps a) to e) are performed.

5. Picking method of claim 4, wherein during handing over of the first object selection (10) from the first object staging device (12) to the object collection device (14) of the first picking device (13) the first picking device (13) moves along at least a part of the route calculated in step h) for the first picking device (13) to the second meeting point (Pm2).

6. Picking method of claim 4 or 5, further comprising the steps of
i) Recalculating the second meeting point (Pm2) and the second meeting time (T2) to an updated second meeting point (Pm3) and updated second meeting (T3) time based on a current position of the first picking device (13) and/or the second object staging device (20), wherein the current position of the first picking device (13) preferably is the first meeting point (Pm1), between the second object proving device (20) and the first picking device (13), wherein step i) is preferably calculated after the step e), and preferably further comprising the step of
j) Calculating of routes (Rs2, Rp) for each of the second object staging device (20) and the first picking device (13) to the second updated meeting point (Pm3), and
k) Moving the second object staging device (20) and the first picking device (13) to the second updated meeting point (Pm3) at the second updated meeting time (T3), wherein preferably the second object staging device (20) and the first picking device (13) continue moving after reaching the second updated meeting point (Pm3), and preferably
l) Handing over the second object selection (21) from the second object staging device (20) to the first object collection device (14) of the first picking device (13) after reaching the second updated meeting point (Pm3).

7. Picking method of one of the preceding claims, comprising the step of
m) Transporting of the first object selection (10) to a delivery point (Dp) by the first picking device (13), in particular from the first meeting point (Pm1), wherein step m) is preferably performed after steps e) or l), and preferably
n) Transporting of the second object selection (21) and/or the first object selection (10) to a delivery point (Dp) by the first picking device (13), in particular after reaching the first meeting point (Pm1) or the second updated meeting point (Pm3), and preferably comprising the step of calculating a route (Rp) from a current position of the first picking device (13) to a delivery point (Dp) and moving the first picking device (13) to the delivery point (Dp) along said route (R).

8. Picking method of one of the preceding claims, further comprising the step of handing over of at least a part of the objects, in particular all objects, present in the first object collection device (14) from the first picking device (13) to the delivery point (Dp).

9. Picking method of one of the preceding claims, wherein the first picking device (13) comprises a first manipulating mechanism (15), in particular a first grabbing mechanism, for picking up, handing over and/or dropping down of objects, in particular objects in the first object collection device (14), objects in the first object staging device (12) and/or in a second object staging device (20).

10. Picking method of one of the preceding claims, wherein the first object staging device (12) comprises a second manipulating mechanism (16), in particular a second grabbing mechanism, for picking up, handing over and/or dropping down of objects, in particular object selections (12) from the storage facility (11a), and/or wherein the second object staging device (20) comprises a third manipulating mechanism (22), in particular a third grabbing mechanism, for picking up, handing over and/or dropping down of objects, in particular object selections (21) from the storage facility (11a).

11. Picking method of one of the preceding claims, wherein the first picking device (13) comprises a first sensor unit (17) for determining a position of the first picking device (13) and/or for determining a distance between the first picking device (13) and a further component, in particular the first and/or a second object staging device (12, 20), wherein preferably position values and/or distance values of the first sensor unit (17) are used for calculation of meeting points, meeting times and/or routes, and/or wherein the first object staging device (12) comprises a second sensor unit (18) for determining a position of the first object staging device (12) and/or for determining a distance between the first object staging device (12) and a further component, in particular the first picking device (13), wherein preferably position values and/or distance values of the second sensor unit (18) are used for calculation of meeting points, meeting times and/or routes, and/or wherein the second object staging device (20) comprises a third sensor unit (23) for determining a position of the second object staging device (20) and/or for determining a distance between the second object staging device (20) and a further component, in particular the first picking device (13), wherein preferably position values and/or distance values of the third sensor unit (23) are used for calculation of meeting points, meeting times and/or routes.

12. Picking method of any one of the preceding claims, wherein at least part of the calculation of meeting points, meeting times and/or routes are performed by a first control unit (19) of the first picking device (13), and/or wherein at least a part of the calculation of meeting points, meeting times and/or routes are performed by a second control unit (19a) of the first object staging device (12), and/or wherein at least a part of the calculation of meeting points, meeting times and/or routes are performed by a third control unit (24) of the second object staging device (20).

13. Picking method of one of the preceding claims, wherein a second object staging device (20) is provided, wherein current positions of the first object staging device (12), the second object staging device (20) and the first picking device (13) are determined and wherein a first distance between the first picking device (13) the first object staging device (12) and a second distance between the first picking device (13) and the second object staging device (20) are determined, and wherein a first meeting time (T1) and a second meeting time (T2) for the first picking device (13) and the second object staging device (20) with the first picking device (13) are determined based on the first and the second distance, wherein preferably the first and second meeting times (T1, T2) are determined such that traveling times and/or traveling distances along routes (R) of the first and/or second object staging device (12, 20) between their respective current positions and the current position of the first picking device (13) are minimized.

14. System (100) comprising at least a first object staging device (12) and at least a first picking device (13) having a first object collection device (14) each configured for use in a picking method according to one of claims 1 to 13.

15. A computer program product comprising a computer-readable storage medium having stored thereon a program that, once loaded into the computer's memory, enables a computer to perform the picking method according to any one of claims 1 to 13, in cooperation with a system (100) according to claim 14.
